# FASCICULE DE BREVET EUROPEEN

(11) **EP 1 397 284 B1**
(45) Date de publication et mention de la délivrance du brevet: **13.08.2008**
(21) Numéro de dépôt: 02751259.9
(22) Date de dépôt: 18.06.2002
(51) Int. Cl.: B62D 25/08, B62D 29/00, B60Q 1/00, B60R 19/00

(54) **FACE AVANT DE VEHICULE AUTOMOBILE AVEC EQUIPEMENTS INTEGRES**
KRAFTFAHRZEUGVORDERBAU MIT INTEGRIERTEN AUSRÜSTUNGSTEILEN
FRONT END OF A MOTOR VEHICLE WITH INTEGRATED FITTINGS

(30) Priorité: 19.06.2001 FR 0108034
(43) Date de publication de la demande: 17.03.2004
(73) Titulaire: VALEO SYSTEMES THERMIQUES, 78320 Le Mesnil Saint-Denis (FR)
(72) Inventeur: GUYOMARD, Jean-Nicolas, F-27930 Le Mesnil Fuguet (FR); GUINEHUT, Sébastien, F-75013 Paris (FR); HARAND, Pascal, F-78190 Trappes (FR)
(74) Mandataire: Rolland, Jean-Christophe
(86) Numéro de dépôt international: PCT/FR2002/002089
(87) Numéro de publication internationale: WO 2002/102645

(56) Documents cités:
- EP-A- 0 652 150
- EP-A- 1 059 200
- EP-A- 1 095 844
- WO-A-01/00478
- WO-A-99/54187
- DE-A- 19 732 301
- FR-A- 2 801 027
- FR-A- 2 802 496
- FR-A- 2 817 820
- US-A1- 2002 015 310

## Description

L'invention concerne une face avant de véhicule automobile et plus particulièrement une telle face avant du type comprenant un support destiné à recevoir des équipements.

Une face avant, appelée aussi façade avant, est un élément de structure susceptible d'intégrer divers équipements du véhicule tels que projecteurs, clignotants, avertisseur sonore, échangeur thermique, groupe moto-ventilateur ou module de refroidissement complet, etc.

La face avant, ainsi pourvue de ses équipements, constitue un module unitaire préparé et livré par l'équipementier et prêt à être monté sur le véhicule par le constructeur. Le montage de ce module unitaire se fait par raccordement à des éléments de structure latéraux du véhicule, tels que longerons, ailes ou coque, puis mise en place d'un pare-choc ou bouclier frontal rapporté sur le module.

Une telle face avant est généralement réalisée sous la forme d'un élément monobloc, en particulier sous la forme d'un élément composite métal/plastique. Il est connu en effet, notamment d'après la publication EP-A-0 658 470, de réaliser une face avant sous la forme d'une armature métallique en tôle emboutie, sur laquelle est surmoulée une matière plastique, en particulier du type polyamide. Il est connu aussi d'associer à la face avant une poutre pare-choc, encore appelée poutre bouclier, qui participe à la protection des composants du module en cas de choc frontal.

Une face avant est généralement composée d'un radiateur ou module de refroidissement, de deux projecteurs, d'une poutre pare-choc et d'une pièce support. Ces composants sont en général rapportés et fixés à la partie support par différents moyens de fixation, tels que des vis ou des attaches ou clips.

Ainsi, il existe plusieurs procédés pour assembler les projecteurs sur le support de la face avant. Ils peuvent tre notamment fixés par un système de vis couplées à des plots de guidage. Un exemple de montage de projecteurs comprend deux vis disposées suivant l'axe Z du véhicule et deux plots de guidage disposés suivant l'axe X du véhicule et associés à deux vis suivant le mme axe.

Dans cette réalisation connue, chacun des projecteurs, y compris son boîtier, est ainsi rapporté sur le support de la face avant par une fixation à l'aide de quatre vis.

Cette solution connue nécessite que le support de la face avant comprenne deux parties conformées délimitant chacune un volume pour recevoir le projecteur.

Chacune de ces parties conformées comprend généralement une patte sensiblement horizontale sur laquelle vient en appui le projecteur et une traverse supérieure, généralement horizontale, située au-dessus de la patte et reliée à cette dernière par deux éléments généralement verticaux dont l'un forme un montant intérieur et l'autre un montant extérieur. Généralement, les deux traverses supérieures sont reliées entre elles par une autre traverse qui, en combinaison avec les deux montants intérieurs, délimite un logement pour le radiateur ou module de refroidissement.

Ces deux parties conformées, qui reçoivent respectivement les deux projecteurs, ont pour inconvénient de générer de l'encombrement puisqu'elles doivent dégager un volume suffisant pour recevoir à chaque fois un boîtier de projecteur.

En outre, ces solutions connues nécessitent plusieurs opérations de montage et de réglage des projecteurs.

Les documents EP 1 095 844 et FR 2 801 027 proposent tous les deux une face avant de véhicule automobile comprenant un support ayant deux parties latérales, en accord avec les caracteristiques du preambule de la revendication 1.

L'invention a notamment pour but de surmonter les inconvénients précités.

Elle vise notamment à procurer une face avant de véhicule automobile facilitant le montage et 1e réglage des projecteurs.

L'invention vise aussi à procurer une face avant de véhicule automobile présentant une résistance mécanique élevée et offrant une sécurité élevée en cas d'impact.

Elle propose à cet effet une face avant de véhicule automobile, du type comprenant un support ayant deux parties latérales intégrant chacune un boîtier de projecteur de manière à constituer à chaque fois un ensemble monobloc, dans laquelle les parties latérales sont agencées pour réaliser une liaison structurelle entre des longerons supérieurs et des longerons inférieurs du véhicule et dans laquelle chacune des parties latérales comprend un montant latéral ou jambage qui prolonge le boîtier de projecteur .

Ainsi, le support de la face avant comprend deux parties latérales dont chacune intègre le boîtier de projecteur et forme une liaison structurelle entre les longerons du véhicule.

Dans le sens où il est utilisé présentement, le terme "boîtier de projecteur" entend désigner uniquement l'enveloppe en matière plastique dans laquelle sont assemblés les composants internes du projecteur comme la lampe, le réflecteur, les connecteurs, le capot d'étanchéité, le faisceau électrique, etc. Le boîtier de projecteur est en outre fermé par une glace.

Du fait que le boîtier de projecteur se trouve intégré à chaque fois à une partie latérale, cela permet de réduire, voire supprimer, certaines parties du support, notamment la patte sur laquelle venait s'appuyer le projecteur.

On forme ainsi deux parties latérales monoblocs qui permettent de rigidifier le boîtier du projecteur, de diminuer l'encombrement global, et de renforcer la structure de la face avant.

Dans une forme de réalisation préférée de l'invention, chacune des parties latérales comprend un montant latéral, encore appelé jambage, qui prolonge le boîtier de projecteur. De préférence, chaque montant latéral s'étend suivant une direction généralement verticale et prolonge le boîtier de projecteur vers le bas.

Il est avantageux que les parties latérales aient des interfaces respectives servant respectivement à la fixation des extrémités d'une poutre supérieure formant traverse et faisant partie de la face avant.

Les parties latérales peuvent être munies chacune de nervures supérieures. Celles-ci servent notamment à renforcer la partie latérale, et plus particulièrement le boîtier de projecteur, dans une région où la partie latérale se substitue à la poutre supérieure d'une face avant classique.

Dans une variante de réalisation, les parties latérales intègrent chacune une partie d'une poutre supérieure formant traverse et faisant partie de la face avant, de manière à constituer un ensemble monobloc.

Avantageusement, cette poutre supérieure comprend au moins une fixation de serrure.

Selon encore une autre caractéristique avantageuse de l'invention, les parties latérales ont des interfaces respectives servant respectivement à la fixation d'une poutre pare-choc, soit directement, soit par l'intermédiaire de moyens d'amortissement intégrés à la poutre pare-choc.

Chaque partie latérale est avantageusement prise en sandwich entre un longeron inférieur du véhicule et la poutre pare-choc. En variante, chaque partie latérale est fixée à la poutre pare-choc, et cette poutre pare-choc est fixée à des longerons inférieurs du véhicule.

Il est possible en outre de réunir les parties latérales par une poutre inférieure. Cette poutre inférieure peut servir notamment de poutre-piéton, de convergent, de déflecteur aérodynamique ou d'isolant acoustique.

Les parties latérales peuvent comprendre aussi des moyens de fixation pour le montage d'un radiateur ou d'un module de refroidissement. Ces moyens de fixation peuvent comprendre des pattes de fixation et/ou des attaches pour des plots amortisseurs.

Les parties latérales sont avantageusement formées chacune en une matière plastique choisie parmi les matières thermodurcissables et les matières thermoplastiques. La matière thermoplastique peut être choisie en particulier parmi un polyamide ou un polypropylène renforcé par des fibres de verre.

Les parties latérales peuvent aussi être formées chacune en une matière composite ou hybride de type métal/plastique. En ce cas, les parties latérales comprennent avantageusement un métal dans les zones de fixation.

Selon un autre développement avantageux de l'invention, chaque boîtier de projecteur est fermé par une glace, et un élément intermédiaire à absorption d'énergie est interposé entre le boîtier de projecteur et la glace pour absorber l'énergie d'un impact éventuel contre la glace du projecteur.

Ainsi, en cas d'une collision avec un piéton, l'énergie d'impact est absorbée, et le projecteur ne présente plus de point critique, ou point dur, pour l'impact vis à vis du piéton.

Dans une forme de réalisation de l'invention, l'élément intermédiaire est agencé pour permettre un déplacement de la glace en cas d'impact.

Dans une autre forme de réalisation, l'élément intermédiaire porte la glace et est agencé pour coulisser dans le boîtier de projecteur et permettre un recul de la glace vers l'arrière du véhicule en cas d'impact.

Cet élément intermédiaire coulissant est avantageusement réalisé sous la forme d'une rehausse et est muni d'un joint périphérique pour assurer l'étanchéité entre la rehausse et le boîtier de projecteur.

Dans une autre forme de réalisation, l'élément intermédiaire est réalisé sous la forme d'un élément déformable, en particulier d'un soufflet, interposé entre le boîtier de projecteur et la glace.

Il est avantageux que l'élément intermédiaire soit agencé pour offrir une résistance au mouvement et permettre ainsi d'absorber une partie de l'énergie d'un impact.

L'élément intermédiaire peut être déplaçable ou déformable de manière réversible. Cela signifie que cet élément reprendra sa position, lorsque les causes de l'impact auront cessé. En ce cas, les éléments à remplacer seront moins nombreux.

Dans une autre forme de réalisation, l'élément intermédiaire est réalisé sous la forme d'un élément fusible agencé pour se rompre au moins en partie en cas d'impact contre la glace.

Cet élément intermédiaire fusible peut être, par exemple, intégré au boîtier de projecteur ou encore à la glace.

Dans la description qui suit, faite seulement à titre d'exemple, on se réfère aux dessins annexés, sur lesquels :
- la figure 1 est une vue en perspective d'une face avant de véhicule automobile suivant une première forme de réalisation de l'invention;
- la figure 2 est une vue antérieure d'une des parties latérales de la face avant de la figure 1;
- la figure 3 est une vue postérieure de la partie latérale représentée à la figure 2;
- la figure 4 est une demi-vue en perspective d'une face avant de véhicule automobile selon une deuxième forme de réalisation de l'invention;
- la figure 5 est une autre demi-vue de la face avant de la figure 4;
- la figure 6 est une vue antérieure d'une des parties latérales de la face avant des figures 4 et 5;
- la figure 7 est une vue postérieure de la partie latérale de la figure 6;
- la figure 8 est une vue partielle en perspective d'une face avant de véhicule automobile selon une troisième forme de réalisation de l'invention;
- la figure 9 est une vue en perspective d'une partie latérale comportant un élément intermédiaire coulissant;
- la figure 10 est une vue en perspective d'une partie latérale de face avant comprenant un élément intermédiaire déformable;
- les figures 11 et 12 sont des vues en perspective de deux parties latérales de face avant ayant chacune un élément intermédiaire fusible ; et
- la figure 13 est une vue en perspective d'une face avant de véhicule automobile suivant une variante de réalisation de la figure 1.

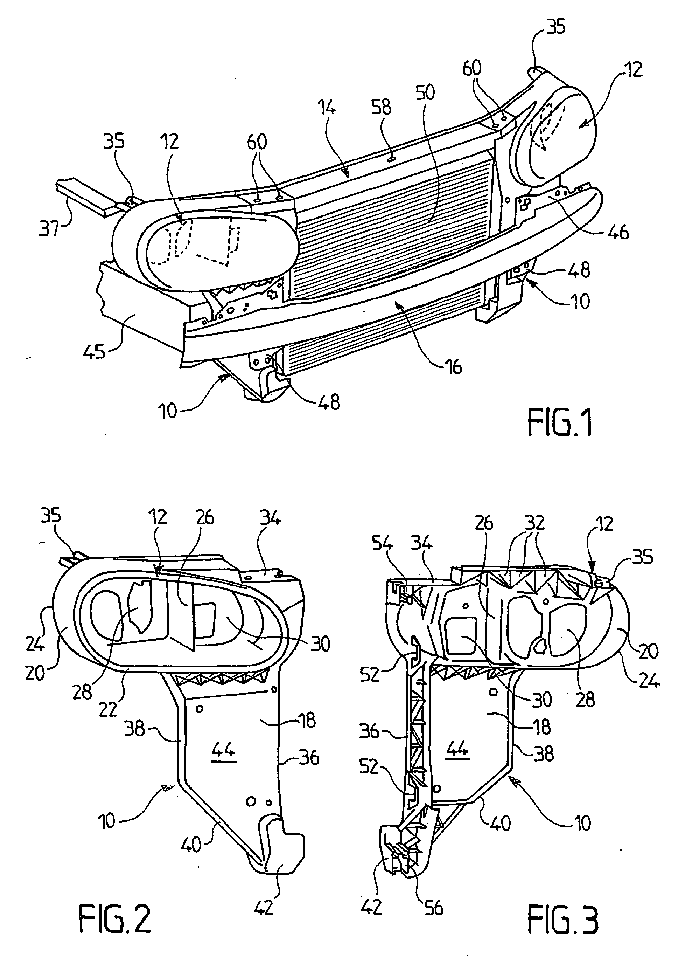

On se réfère d'abord à la figure 1 qui représente une face avant de véhicule automobile qui comprend deux parties latérales 10 intégrant chacune un boîtier de projecteur 12 de manière à constituer à chaque fois un ensemble monobloc. Ces deux parties latérales 10 sont réunies entre elles par une poutre supérieure 14, appelée aussi traverse supérieure, s'étendant à l'horizontale lorsque le module de face avant est monté sur un véhicule automobile. En outre, ces deux parties latérales 10 sont réunies entre elles par une poutre pare-choc 16.

On décrira maintenant plus en détail, en référence aux figures 2 et 3, l'une des parties latérales 10 de la face avant de la figure 1. Dans l'exemple, il s'agit de la partie latérale 10 qui est située du côté droit du véhicule, donc du côté gauche de la figure 1.

La partie latérale 10 (figures 2 et 3) constitue un ensemble monobloc qui peut être réalisé par tout procédé de transformation connu, utilisant une technique de compression ou d'injection.

Ainsi, chacune des parties latérales est avantageusement réalisée en une matière plastique choisie parmi les matières thermodurcissables et les matières thermoplastiques. A titre d'exemple, on peut utiliser un polyamide, en particulier du polyamide 6, renforcé par des fibres de verre, ou encore un polypropylène renforcé par des fibres de verre.

Il est possible aussi de réaliser les parties latérales en une matière composite ou hybride de type métal/plastique, comme enseigné par la publication EP-A-0 658 470 mentionnée en introduction.

La partie latérale 10 représentée aux figures 2 et 3 comprend un montant latéral 18 (appelé aussi jambage) qui prolonge le boîtier de projecteur 12. Dans l'exemple, ce montant latéral 18 s'étend suivant une direction généralement verticale et il prolonge le boîtier de projecteur vers le bas. Comme on le voit aux figures 2 et 3, le boîtier de projecteur 12 comprend une paroi 20 définissant une courbe continue de forme généralement oblongue. Cette paroi 20 présente un bord antérieur 22 destiné à recevoir une glace de projecteur (non représentée) et un bord postérieur 24 orienté vers l'arrière du boîtier de projecteur 12. Dans l'exemple, le boîtier de projecteur est divisé par une cloison généralement verticale 26 en deux parties : une partie principale 28 destinée à loger la lampe principale du projecteur et son réflecteur associé, et une partie secondaire 30 destinée à loger une autre lampe, par exemple celle d'un clignotant et son réflecteur associé.

Ces deux parties 28 et 30 sont ouvertes vers l'arrière et elles sont conformées et en outre rattachées à la paroi 20 par des nervures supérieures 32 comme on le voit sur le haut de la figure 3.

Les nervures 32 sont disposées en partie supérieure du boîtier de projecteur 12 et elles s'étendent dans une position sensiblement horizontale lorsque la face avant est implantée sur le véhicule. Ces nervures 32 servent à renforcer la partie latérale 10, et plus particulièrement le boîtier 12, à l'endroit où la partie latérale se substitue à la poutre supérieure d'une face avant classique.

La paroi 20 définit, en partie supérieure, une interface 34 aménagée pour servir de fixation à une des extrémités de la poutre supérieure 14 de la figure 1. Cette poutre supérieure, encore appelée traverse supérieure, est avantageusement réalisée en une matière plastique du type défini précédemment ou encore en une matière hybride, c'est-à-dire métal/plastique.

Chacune des extrémités de la poutre supérieure 14 est fixée sur une interface 34, en forme de logement, de préférence à l'aide de vis pour permettre son montage et son démontage éventuels, par exemple en cas de réparation.

Lorsque la poutre 34 est fixée entre les deux parties latérales 10, elle vient dans le prolongement des nervures supérieures 32 des deux parties latérales en formant avec elles un ensemble rigide se substituant à une poutre supérieure classique.

Par ailleurs, chaque partie latérale 10 comprend une patte de fixation 35, dans l'exemple rattachée au boîtier de projecteur 12, et destinée à être fixée à un longeron supérieur 37 d'un véhicule automobile.

Le montant latéral 18 est limité par un bord intérieur 36 généralement vertical et un bord extérieur 38 généralement vertical qui se prolonge par un bord incliné 40, lequel rejoint le bord intérieur 36 pour former une partie d'extrémité 42.

Dans l'exemple de réalisation, les deux bords 36 et 38 sont suffisamment espacés l'un de l'autre pour procurer une interface 44 servant à la fixation de la poutre pare-choc 16 de la figure 1.

Dans le cas où la partie latérale 10 est formée en une matière hybride ou composite du type métal/matière plastique, les zones de fixation de celle-ci, et notamment les interfaces 34 et 44, sont avantageusement en métal pour conférer une meilleure résistance mécanique dans les régions les plus sollicitées.

La fixation de la poutre pare-choc sur l'interface 44 s'effectue par boulonnage, l'interface 44 se trouvant ainsi pris en sandwich entre la poutre pare-choc 16 et un longeron inférieur 45 du véhicule. A cet effet, la poutre 16 comprend des pattes supérieures 46 et des pattes inférieures 48 servant à sa fixation sur l'interface 44 par des vis ou boulons appropriés. Dans l'exemple, les interfaces 44 des parties latérales 10 sont fixées directement à la poutre pare-choc. En variante, elles peuvent être fixées sur des moyens amortisseurs (non représentés) intégrés à la poutre pare-choc.

Chacune des parties latérales 10 réalise ainsi une liaison structurelle entre les longerons supérieurs 37 et les longerons inférieurs 45 du véhicule et constitue une partie du support de la face avant. Les fixations de chaque partie latérale 10 à un longeron supérieur et à un longeron inférieur permettent de rattraper les dispersions du châssis du véhicule.

De plus, via l'interface 34 de la partie latérale 10 qui reçoit la traverse supérieure 14, on réalise une liaison entre les deux projecteurs. La traverse 14 est simplifiée par rapport à l'état de la technique, dans la mesure où elle ne relie pas directement les deux longerons supérieurs, mais uniquement l'extrémité des deux boîtiers de projecteur.

Les boîtiers de projecteur sont conçus pour permettre, d'une part, la transmission des efforts de la serrure (fixée sur la traverse), aux longerons et, d'autre part, la liaison rigide via la traverse des deux longerons supérieurs du véhicule.

La liaison structurelle traverse/boîtier est conçue pour permettre un ajustement du point de serrure, dans la direction de l'axe Y du véhicule, pour récupérer les dispersions suivant les axes X et Y dues aux longerons, pour rigidifier la liaison entre les deux boîtiers de projecteur et ainsi permettre à la face avant de résister aux efforts de torsion, d'impacts, de vibrations, etc.

Les bords intérieurs 36 des parties latérales 10 délimitent, en combinaison avec la poutre supérieure 14, un espace de forme générale rectangulaire destiné à recevoir un radiateur de refroidissement 50 (figure 1) ou un module de refroidissement, c'est-à-dire un ensemble comprenant un radiateur de refroidissement plus éventuellement un condenseur de climatisation et un groupe moto-ventilateur (non représentés).

Chacune des parties latérales 10 comprend des moyens de fixation du module ou du radiateur de refroidissement. Dans l'exemple, ces moyens de fixation comprennent des pattes de fixation 52, encore appelées clips, et des attaches 54 et 56 pour des plots amortisseurs (figure 3).

Il en résulte que chacune des parties latérales 10 contribue aussi à la fixation du radiateur ou module de refroidissement 50.

Il est à noter que la poutre supérieure 14 peut servir à la fixation d'une serrure centrale grâce à une ouverture 58 ou de deux serrures latérales grâce à deux paires d'ouvertures 60 (figure 1) qui servent aussi à la fixation de la poutre supérieure 14 sur les deux parties latérales 10.

La liaison structurelle entre chaque partie latérale 10 et la poutre supérieure 14 est conçue pour réaliser un ajustement suivant deux directions perpendiculaires. Ceci permet de réaliser un ajustement du point de serrure suivant la direction de l'axe Y du véhicule, pour récupérer les dispersions suivant les axes X et Y dues aux longerons, pour rigidifier la liaison entre les deux boîtiers de projecteur 12 et ainsi permettre à la face avant de résister aux efforts de torsion, de choc, de vibration, etc.

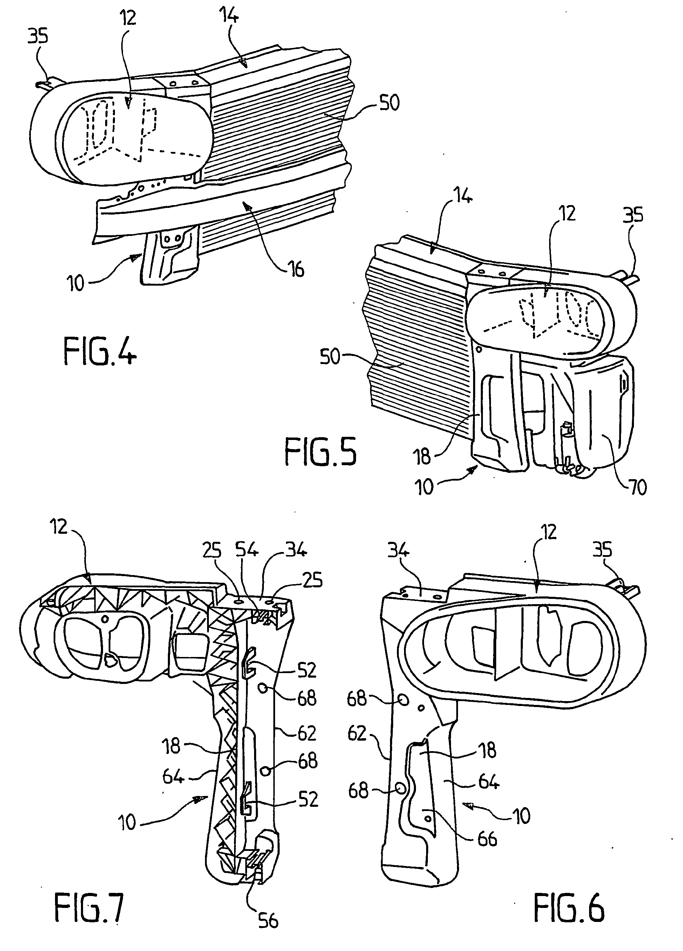

Pour cela les ouvertures 60 (figure 1) de la poutre supérieure 14 sont avantageusement des ouvertures oblongues qui s'étendent dans la direction Y et qui coopèrent avec des ouvertures 25 (figure 7) de la partie latérale 10.

Cette forme de réalisation des figures 1 à 3 offre aussi l'avantage de permettre un gain dans la direction "Y" du fait que le montant 18 se trouve pris en sandwich entre la poutre pare-choc et les longerons inférieurs (non représentés) du véhicule.

Du fait de ce gain dans la direction Y, cela permet l'utilisation d'échangeurs de chaleur (radiateurs, condenseurs, etc.) beaucoup plus grands, et donc d'accroître la performance de l'échange thermique.

On se réfère maintenant aux figures 4 à 7 pour décrire la deuxième forme de réalisation de l'invention.

Cette deuxième forme s'apparente à celle des figures précédentes. Une différence essentielle réside dans le fait que chaque montant latéral 18 est moins large que celui des figures précédentes. Ainsi, comme montré sur les figures 6 et 7, chaque montant est délimité par un bord intérieur 62 et un bord extérieur 64, sensiblement parallèles entre eux, délimitant une interface 66 plus étroite que l'interface 44 citée précédemment. Chacune des interfaces 66 comprend deux trous 68 pour permettre la fixation d'une poutre pare-choc 16 comme on le voit aux figures 4 et 5.

L'avantage de cette version est qu'elle permet de gagner en encombrement suivant la direction "Z", ce qui permet par exemple d'avoir un volume plus important pour recevoir un accessoire, par exemple un bidon 70 (figure 5) servant de réservoir de lave-glace.

Un autre avantage est de pouvoir utiliser ce volume disponible pour le projecteur lui-même et ainsi accroître ses performances (réflecteur plus grand).

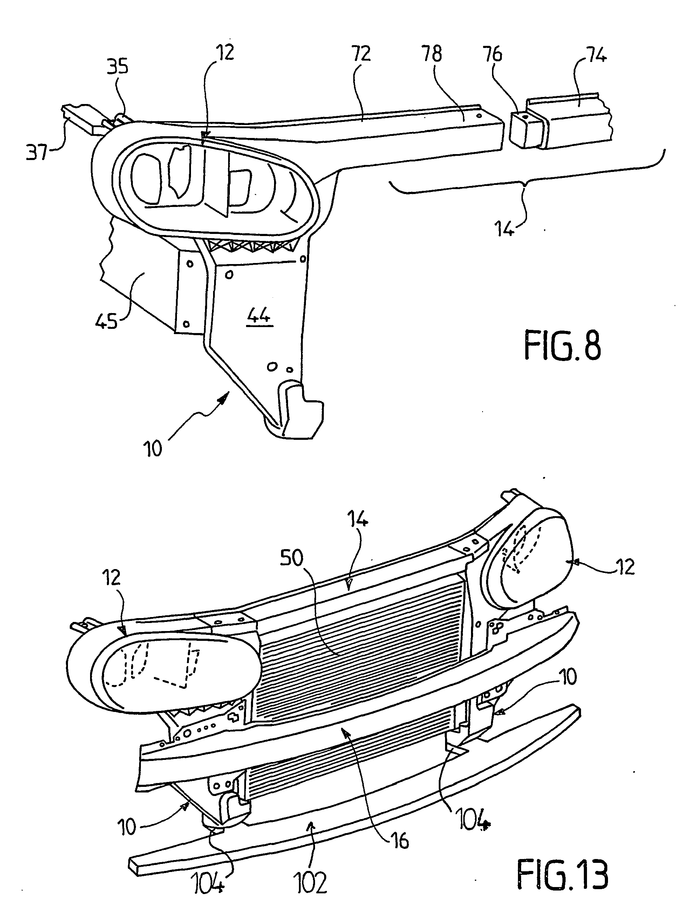

La forme de réalisation de la figure 8 s'apparente à celle des figures 1 à 3, si ce n'est que les parties latérales 10 intègrent chacune une partie 72, respectivement 74, d'une poutre supérieure 14 formant traverse et faisant partie de la face avant. Chacune des parties de poutre 72 et 74 est ainsi réalisée monobloc avec la partie latérale 10 dont elle dépend. La partie 74 comprend un embout d'extrémité 76 destiné à s'emboîter dans l'extrémité 78 de la partie 72 et à être fixé par des vis (non représentées).

Dans les formes de réalisation précédentes, chacune des parties latérales 10 est prise en sandwich entre un longeron inférieur 45 du véhicule et la poutre pare-choc 16. En variante, il est envisageable de fixer chaque partie latérale 10 à la poutre pare-choc 16 et de fixer cette poutre pare-choc sùr les longerons inférieurs du véhicule. Le montant 18 n'est alors plus pris en sandwich entre la poutre pare-choc et le longeron inférieur.

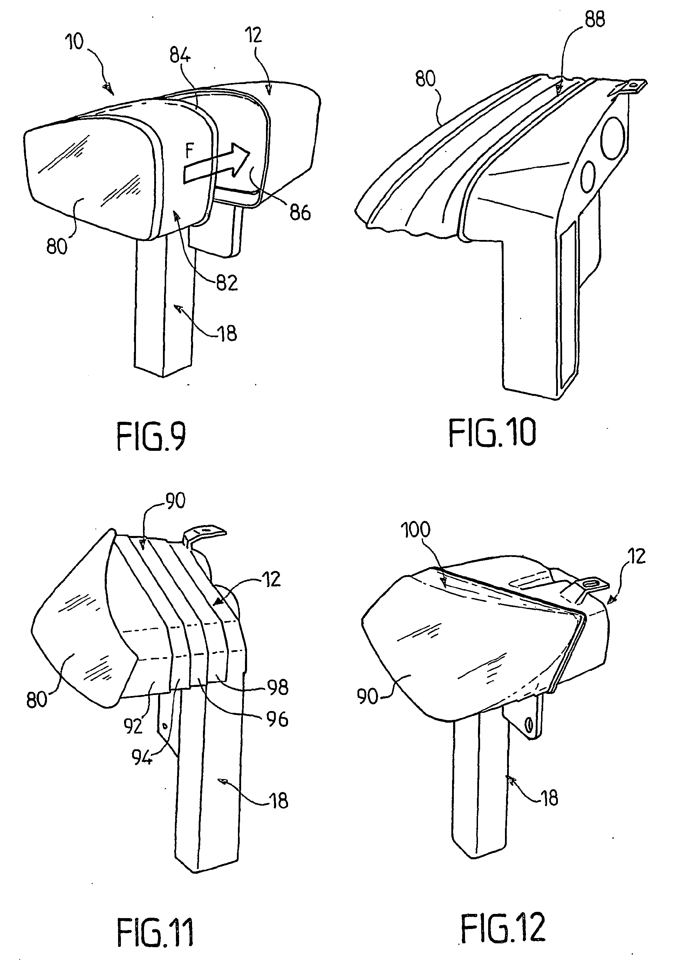

On se réfère maintenant à la figure 9 qui montre une partie latérale 10 selon l'invention qui est aménagée pour amortir un impact, par exemple un choc piéton, intervenant sur le projecteur.

Le boîtier de projecteur 12 est fermé par une glace 80 laquelle est portée par un élément intermédiaire 82. Cet élément intermédiaire porte la glace 80 et est agencé pour coulisser dans le boîtier de projecteur 12 et permettre un recul de la glace vers l'arrière du véhicule en cas d'impact, comme montré par la flèche F. Cet élément intermédiaire 82 est réalisé sous la forme d'une rehausse et est muni d'un joint périphérique 84 pour assurer l'étanchéité entre la rehausse et le boîtier de projecteur. L'élément 82 est apte à coulisser à l'intérieur du boîtier 12 sans venir en contact avec le réflecteur 86 qui se trouve placé au fond du boîtier. Ainsi, en cas d'impact contre la glace 80, l'ensemble se trouve déplacé vers l'arrière, sans risquer de venir endommager le réflecteur, du moins si l'impact n'est pas trop violent.

Il en résulte que le déplacement de cet élément intermédiaire peut être réversible. En d'autres termes, une fois que les causes de l'impact ont cessé, l'élément intermédiaire 82 portant la glace peut être replacé dans sa position initiale.

Cet élément intermédiaire est agencé pour offrir une résistance au mouvement et permettre ainsi d'absorber une partie de l'énergie d'un impact. En pratique, cet élément intermédiaire peut être retenu par des moyens de butée suffisamment résistants pour permettre le coulissement de l'élément intermédiaire dès que l'impact dépasse un niveau suffisant.

Dans la forme de réalisation de la figure 10, un élément intermédiaire 88 à absorption d'énergie est également interposé entre le boîtier 12 et la glace 80. Dans cette forme de réalisation, il s'agit d'un élément déformable, en particulier d'un soufflet. Celui-ci peut être réalisé en un matériau rigide ou semi-rigide.

Comme dans la forme de réalisation précédente, il est avantageusement agencé pour offrir une résistance au mouvement et permettre d'absorber une partie de l'énergie d'un impact. Cet élément intermédiaire est avantageusement déplaçable de manière réversible. Cela signifie que cet élément intermédiaire retrouvera sa position initiale dès que les causes de l'impact auront cessé.

Dans la forme de réalisation de la figure 11, l'élément intermédiaire 90 est un élément fusible agencé pour se rompre au moins en partie en cas d'impact contre la glace 80. Ici, l'élément 90 est intégré au boîtier 12. Cet élément intermédiaire est avantageusement constitué par une succession d'étages 92, 94, 96 et 98 reliés entre eux par des ponts de matière (non visibles sur le dessin) susceptibles de se rompre en cas d'impact. Il est bien évident que cet élément intermédiaire 90 n'est pas déformable de façon réversible. "L'ensemble devra donc être remplacé en cas d'endommagement lors d'un impact.

Dans la forme de réalisation de la figure 12, un élément intermédiaire fusible 100 est également interposé entre la glace 80 et le boîtier 12 du projecteur. Dans ce cas, l'élément intermédiaire 100 est intégré à la glace 80. Cela signifie, en d'autres termes, que la glace et l'élément intermédiaire fusible 100 sont réalisés monobloc par moulage d'un verre minéral ou organique approprié. L'élément intermédiaire fusible 100 comporte des zones de moindre résistance, par exemple des plis, susceptibles de se rompre de façon privilégiée en cas d'impact.

Dans les différentes formes de réalisation des figures 9 à 12, l'élément intermédiaire 82, 84, 90 ou 100 permet un déplacement de la glace 80 par rapport au boîtier 12 et une absorption de l'énergie d'un impact sur la glace. Ainsi, par exemple en cas d'une collision avec un piéton, l'énergie d'impact est absorbée et le projecteur ne présente plus de point critique
ou de point dur lors de l'impact. La sécurité de la face avant s'en trouve nettement améliorée.

Bien entendu, l'invention n'est pas limitée aux formes de réalisation décrites précédemment à titre d'exemple et elle s'étend à d'autres variantes.

En particulier, il est possible aussi de réunir les extrémités inférieures des deux parties latérales 10 par une poutre inférieure venant se loger sous le radiateur ou module de refroidissement et pouvant servir notamment de poutre-piéton, de convergent, de déflecteur, aérodynamique ou d'isolant acoustique.

La figure 13 montre une face avant de véhicule automobile qui est analogue à celle de la figure 1 et qui comprend en outre une poutre inférieure 102. Dans l'exemple la poutre 102 est une poutre-piéton destinée à absorber un choc en partie inférieure, par exemple en cas de collision avec un piéton. Cette poutre 102 possède deux pattes 104 permettant sa fixation aux extrémités inférieures des parties latérales 10.

## Revendications

1. Face avant de véhicule automobile, du type comprenant un support ayant deux parties.latérales (10) intégrant chacune un boîtier de projecteur (12) de manière à constituer à chaque fois un ensemble monobloc, **caractérisée en ce que** les parties latérales (10) sont agencées pour réaliser une liaison structurelle entre des longerons supérieurs (37) et des longerons inférieurs (45) du véhicule et **en ce que** chacune des parties latérales (10) comprend un montant latéral ou jambage (18) qui prolonge le boîtier de projecteur (12).

2. Face avant selon la revendication 2, **caractérisée en ce que** chaque montant latéral (18) s'étend suivant une direction généralement verticale et prolonge le boîtier de projeteur (12) vers le bas

3. Face avant selon l'une des revendications précédentes, **caractérisée en ce que** les parties latérales (10) ont des interfaces respectives (34) servant respectivement à 1a fixation des extrémités d'une poutre supérieure (14) formant traverse et faisant partie de la face avant.

4. Face avant selon l'une des revendications précédentes, **caractérisée en ce que** les parties latérales (10) sont munies chacune de nervures supérieures (32).

5. Face avant selon la revendication précédente, **caractérisée en ce que** les nervures supérieures (32) servent notamment à renforcer la partie latérale (10), et plus particulièrement le boîtier de projecteur (12), dans une région où la partie latérale se substitue à la poutre supérieure d'une face avant classique.

6. Face avant selon l'une des revendications 1 à 2,
**caractérisée en ce que** les parties latérales (10) intègrent chacune une partie (72,74) d'une poutre supérieure (14) formant traverse et faisant partie de la face avant, de manière à constituer un ensemble monobloc.

7. Face avant selon l'une des revendications 3 à 6, **caractérisée en ce que** la poutre supérieure (14) comprend au moins une fixation de serrure (58,60).

8. Face avant selon l'une des revendications précédentes, **caractérisée en ce que** les parties latérales (10) ont des interfaces respectives (44 ; 66) servant respectivement à la fixation d'une poutre pare-choc (16), soit directement, soit par l'intermédiaire de moyens d'amortissement intégrés à la poutre pare-choc.

9. Face avant selon la revendication précédente, **caractérisée en ce que** chaque partie latérale (10) est prise en sandwich entre un longeron inférieur (45) du véhicule et la poutre pare-choc (16).

10. Face avant selon la revendication 8, **caractérisée en ce que** chaque partie latérale (10) est fixée à la poutre parechoc (16), tandis que cette poutre pare-choc est fixée à des longerons inférieurs (45) du véhicule.

11. Face avant selon l'une des revendications précédentes, **caractérisée en ce que** les parties latérales (10) sont réunies par une poutre inférieure (102).

12. Face avant selon la revendication précédente, **caractérisée en ce que** la poutre inférieure (102) sert notamment de poutre piéton, de convergent, de déflecteur aérodynamique ou d'isolant acoustique.

13. Face avant selon l'une des revendications précédentes, **caractérisée en ce que** les parties latérales (10) comprennent des moyens de fixation pour le montage d'un radiateur ou d'un module de refroidissement (50).

14. Face avant selon 1a revendication précédente, **caractérisée en ce que** les moyens de fixation du radiateur ou du module de refroidissement comprennent des pattes de fixation (52).

15. Face avant selon l'une des revendications 13 et 14, **caractérisée en ce que** les moyens de fixation du radiateur ou du module de refroidissement comprennent des attaches (54) pour des plots amortisseurs (56).

16. Face avant selon l'une des revendications précédentes, **caractérisée en ce que** les parties latérales (10) sont formées chacune en une matière plastique choisie parmi les matières thermodurcissables et les matières thermoplastiques.

17. Face avant selon la revendication précédente, **caractérisée en ce que** la matière plastique est choisie parmi un polyamide ou un polypropylène renforcé par des fibres de verre.

18. Face avant selon l'une des revendications 1 à 15, **caractérisée en ce que** les parties latérales (10) sont formées chacune en' une matière composite ou hybride de type métal/plastique.

19. Face avant selon la revendication précédente, **caractérisée en ce que** les parties latérales (10) comprennent un métal, en particulier dans les zones de fixation (44,66,34).

20. Face avant selon l'une des revendications précédentes, dans laquelle chaque boîtier de projecteur (12) est fermé par une glace (80), **caractérisée en ce qu'**un élément intermédiaire (82 ; 88 ; 90 ; 100) à absorption d'énergie est interposé entre 1e boîtier de projecteur (12) et la glace (80) pour absorber l'énergie d'un impact éventuel contre la glace du projecteur.

21. Face avant selon la revendication précédente, **caractérisée en ce que** l'élément intermédiaire (82) est agencé pour permettre un déplacement de la glace (80) en cas d'impact.

22. Face avant selon l'une des revendications 20 et 21, **caractérisée en ce que** l'élément intermédiaire (82) porte la glace et (80) est agencé pour coulisser dans le boîtier de projecteur (12) et permettre un recul de la glace vers l'arrière du véhicule en cas d'impact.

23. Face avant selon la revendication précédente, **caractérisée en ce que** l'élément intermédiaire coulissant (82) est réalisé sous la forme d'une rehausse et est muni d'un joint périphérique (84) pour assurer l'étanchéité entre la rehausse et le boîtier de projecteur (12).

24. Face avant selon l'une des revendications 20 et 21, **caractérisée en ce que** l'élément intermédiaire (88) est réalisé sous la forme d'un élément déformable, en particulier d'un soufflet, interposé entre le boîtier de projecteur (12) et la glace (80).

25. Face avant selon l'une des revendications 20 à 24, **caractérisée en ce que** l'élément intermédiaire (82 ; 88 ; 90 ; 100) est agencé pour offrir une résistance au mouvement et permettre ainsi d'absorber une partie de l'énergie d'un impact.

26. Face avant selon l'une des revendications 20 à 25, **caractérisée en ce que** l'élément intermédiaire (82 ; 88) est déplaçable ou déformable de manière réversible.

27. Face avant selon l'une des revendications 20 et 21, **caractérisée en ce que** l'élément intermédiaire (90 ; 100) est réalisé sous la forme d'un élément fusible agencé pour se rompre au moins en partie en cas d'impact contre la glace (80).

28. Face avant selon la revendication 27, **caractérisée en ce que** l'élément intermédiaire fusible (90) est intégré au boîtier de projecteur (12).

29. Face avant selon la revendication 27, **caractérisée en ce que** l'élément intermédiaire fusible (100) est intégré à la glace (80).

## Claims

1. Motor vehicle front end panel, of the type comprising a support having two side portions (10) each incorporating a headlight housing (12) so as to always constitute a one-piece assembly, **characterized in that** the side portions (10) are arranged to make a structural connection between upper side members (37) and lower side members (45) of the vehicle and **in that** each of the side portions (10) comprises a side piece or leg (18) which extends the headlight housing (12).

2. Front end panel according to Claim 2, **characterized in that** each side piece (18) lies in a generally vertical direction and extends the headlight housing (12) downwards.

3. Front end panel according to one of the preceding claims, **characterized in that** the side portions (10) have respective interfaces (34) being used respectively for fastening the ends of an upper beam (14) forming a cross member and being part of the front end panel.

4. Front end panel according to one of the preceding claims, **characterized in that** the side portions (10) are each provided with upper ribs (32).

5. Front end panel according to the preceding claim, **characterized in that** the upper ribs (32) are used in particular to strengthen the side portion (10), and more particularly the headlight housing (12), in an area where the side portion replaces the upper beam of a conventional front end panel.

6. Front end panel according to one of Claims 1 to 2, **characterized in that** the side portions (10) each incorporate a portion (72,74) of an upper beam (14) forming a cross member and being part of the front end panel so as to constitute a one-piece assembly.

7. Front end panel according to one of Claims 3 to 6, **characterized in that** the upper beam (14) comprises at least one lock fastening (58,60).

8. Front end panel according to one of the preceding claims, **characterized in that** the side portions (10) have respective interfaces (44,66) being used respectively for fastening a bumper beam (16), either directly, or via shock-absorbing means incorporated in the bumper beam.

9. Front end panel according to the preceding claim, **characterized in that** each side portion (10) is sandwiched between a lower side member (45) of the vehicle and the bumper beam (16).

10. Front end panel according to Claim 8, **characterized in that** each side portion (10) is fastened to the bumper beam (16), while this bumper beam is fastened to lower side members (45) of the vehicle.

11. Front end panel according to one of the preceding claims, **characterized in that** the side portions (10) are joined by a lower beam (102).

12. Front end panel according to the preceding claim, **characterized in that** the lower beam (102) acts in particular as a pedestrian beam, airflow controller, aerodynamic spoiler or sound insulator.

13. Front end panel according to one of the preceding claims, **characterized in that** the side portions (10) comprise fastening means for the mounting of a radiator or a cooling module (50).

14. Front end panel according to the preceding claim, **characterized in that** the fastening means for the radiator or the cooling module comprise fastening lugs (52).

15. Front end panel according to one of Claims 13 and 14, **characterized in that** the fastening means for the radiator or the cooling module comprise clips (54) for buffer blocks (56).

16. Front end panel according to one of the preceding claims, **characterized in that** the side portions (10) are each made of a plastic selected from thermosetting materials and thermoplastic materials.

17. Front end panel according to the preceding claim, **characterized in that** the plastic is selected from a glass-fibre-reinforced polyamide or polypropylene.

18. Front end panel according to one of Claims 1 to 15, **characterized in that** the side portions (10) are each made of a composite or hybrid material of a metal/plastic type.

19. Front end panel according to the preceding claim, **characterized in that** the side portions (10) comprise a metal, in particular in the fastening areas (44,66,34).

20. Front end panel according to one of the preceding claims, in which each headlight housing (12) is closed by a glass (80), **characterized in that** an energy-absorbing intermediate element (82,88,90,100) is inserted between the headlight housing (12) and the glass (80) to absorb the energy of a possible impact against the headlight glass.

21. Front end panel according to the preceding claim, **characterized in that** the intermediate element (82) is arranged to allow a displacement of the glass (80) in the event of an impact.

22. Front end panel according to one of Claims 20 and 21, **characterized in that** the intermediate element (82) holds the glass (80) and is arranged to slide in the headlight housing (12) and allow the glass to move back towards the rear of the vehicle in the event of an impact.

23. Front end panel according to the preceding claim, **characterized in that** the intermediate sliding element (82) is made in the form of a collar and is provided with a peripheral seal (84) to provide the sealing between the collar and the headlight housing (12).

24. Front end panel according to one of Claims 20 and 21, **characterized in that** the intermediate element (88) is made in the form of a crushable element, in particular a bellows, inserted between the headlight housing (12) and the glass (80).

25. Front end panel according to one of Claims 20 to 24, **characterized in that** the intermediate element (82,88,90,100) is arranged to offer resistance to movement and thus absorb a portion of the energy of an impact.

26. Front end panel according to one of Claims 20 to 25, **characterized in that** the intermediate element (82,88) is reversibly movable or crushable.

27. Front end panel according to one of Claims 20 and 21, **characterized in that** the intermediate element (90,100) is made in the form of a frangible element arranged to break at least partially in the event of an impact against the glass (80).

28. Front end panel according to Claim 27,
**characterized in that** the intermediate frangible element (90) is incorporated in the headlight housing (12).

29. Front end panel according to Claim 27,
**characterized in that** the intermediate frangible element (100) is incorporated in the glass (80).

## Patentansprüche

1. Vorderseite eines Kraftfahrzeugs des Typs, die einen Träger aufweist, der zwei Seitenteile (10) hat, die jeweils ein Scheinwerfergehäuse (12) derart enthalten, dass jedes Mal eine einstückige Einheit gebildet wird, **dadurch gekennzeichnet, dass** die Seitenteile (10) eingerichtet sind, um eine Strukturverbindung zwischen oberen Längsbalken (37) und unteren Längsbalken (45) des Fahrzeugs herzustellen, und dass jeder der Seitenteile (10) einen seitlichen Ständer oder Pfosten (18) aufweist, der das Scheinwerfergehäuse (12) verlängert.

2. Vorderseite nach Anspruch 1, **dadurch gekennzeichnet, dass** sich jeder Seitenständer (18) entlang einer allgemein vertikalen Richtung erstreckt und das Scheinwerfergehäuse (12) nach unten verlängert.

3. Vorderseite nach einem der vorhergehenden Ansprüche, **dadurch gekennzeichnet, dass** die Seitenteile (10) jeweilige Schnittstellen (34) haben, die jeweils zum Befestigen der Enden eines oberen Balkens (14) dienen, der einen Querbalken bildet und zur Vorderseite gehört.

4. Vorderseite nach einem der vorhergehenden Ansprüche, **dadurch gekennzeichnet, dass** die Seitenteile (10) jeweils mit oberen Rippen (32) versehen sind.

5. Vorderseite nach dem vorhergehenden Anspruch,
**dadurch gekennzeichnet, dass** die oberen Rippen (32) insbesondere zum Verstärken des Seitenteils (10) und insbesondere des Scheinwerfergehäuses (12), in einem Bereich dienen, in dem der Seitenteil den oberen Balken einer herkömmlichen Vorderseite ersetzt.

6. Vorderseite nach einem der Ansprüche 1 bis 2, **dadurch gekennzeichnet, dass** die Seitenteile (10) jeweils einen Teil (72, 74) eines oberen Balkens (14) integrieren, der einen Querbalken bildet und zu der Vorderseite derart gehört, dass eine einstückige Einheit gebildet wird.

7. Vorderseite nach einem der Ansprüche 3 bis 6, **dadurch gekennzeichnet, dass** der obere Balken (14) mindestens eine Schlossbefestigung (58, 60) aufweist.

8. Vorderseite nach einem der vorhergehenden Ansprüche, **dadurch gekennzeichnet, dass** die Seitenteile (10) jeweilige Schnittstellen (44; 66) haben, die jeweils zum Befestigen eines Stoßfängerbalkens (16) entweder direkt oder über in den Stoßfängerbalken eingebaute Dämpfmittel dienen.

9. Vorderseite nach dem vorhergehenden Anspruch, **dadurch gekennzeichnet, dass** jeder Seitenteil (10) zwischen einem unteren Längsbalken (45) des Fahrzeugs und dem Stoßfängerbalken (16) sandwichartig eingeschlossen ist.

10. Vorderseite nach Anspruch 8, **dadurch gekennzeichnet, dass** jeder Seitenteil (10) an dem Stoßfängerbalken (16) befestigt ist, während dieser Stoßfängerbalken an unteren Längsbalken (45) des Fahrzeugs befestigt ist.

11. Vorderseite nach einem der vorhergehenden Ansprüche, **dadurch gekennzeichnet, dass** die Seitenteile (10) durch einen unteren Balken (102) vereint sind.

12. Vorderseite nach dem vorhergehenden Anspruch, **dadurch gekennzeichnet, dass** der untere Balken (102) insbesondere als Fußgängerbalken, Einlauf, aerodynamischer Ablenker oder Schallisolierer dient.

13. Vorderseite nach einem der vorhergehenden Ansprüche, **dadurch gekennzeichnet, dass** die Seitenteile (10) Befestigungsmittel für die Montage eines Kühlers oder eines Kühlmoduls (50) aufweisen.

14. Vorderseite nach dem vorhergehenden Anspruch,
**dadurch gekennzeichnet, dass** die Befestigungsmittel des Kühlers oder des Kühlmoduls Befestigungspratzen (52) aufweisen.

15. Vorderseite nach einem der Ansprüche 13 und 14,
**dadurch gekennzeichnet, dass** die Befestigungsmittel des Kühlers oder des Kühlmoduls Befestigungen (54) für Dämpfklötze (56) aufweisen.

16. Vorderseite nach einem der vorhergehenden Ansprüche, **dadurch gekennzeichnet, dass** die Seitenteile (10) jeweils aus einem Kunststoff, der aus den Duroplast- und den Thermoplastmaterialien ausgewählt ist, ausgebildet sind.

17. Vorderseite nach dem vorhergehenden Anspruch, **dadurch gekennzeichnet, dass** der Kunststoff aus einem Polyamid oder einem mit Glasfasern verstärkten Polypropylen ausgewählt ist.

18. Vorderseite nach einem der Ansprüche 1 bis 15, **dadurch gekennzeichnet, dass** die Seitenteile (10) jeweils aus einem Verbund- oder Hybridmaterial des Typs Metall/Kunststoff ausgebildet sind.

19. Vorderseite nach dem vorhergehenden Anspruch, **dadurch gekennzeichnet, dass** die Seitenteile (10) ein Metall, insbesondere in den Befestigungszonen (44, 66, 34) aufweisen.

20. Vorderseite nach einem der vorhergehenden Ansprüche, bei der jedes Scheinwerfergehäuse (12) durch eine Scheibe (80) verschlossen ist, **dadurch gekennzeichnet, dass** ein Zwischenelement (82; 88; 90; 100) mit Energieabsorption zwischen das Scheinwerfergehäuse (12) und die Scheibe (80) eingefügt ist, um die Energie eines eventuellen Aufpralls gegen die Scheibe des Scheinwerfers zu absorbieren.

21. Vorderseite nach dem vorhergehenden Anspruch, **dadurch gekennzeichnet, dass** das Zwischenelement (82) eingerichtet ist, um ein Bewegen der Scheibe (80) bei einem Aufprall zu erlauben.

22. Vorderseite nach einem der Ansprüche 20 und 21, **dadurch gekennzeichnet, dass** das Zwischenelement (82) die Scheibe (80) trägt und eingerichtet ist, um in dem Scheinwerfergehäuse (12) zu gleiten und ein Zurückfahren der Scheibe zur Rückseite des Fahrzeugs bei einem Aufprall zu erlauben.

23. Vorderseite nach dem vorhergehenden Anspruch, **dadurch gekennzeichnet, dass** das gleitende Zwischenelement (82) in Form eines Aufsatzes ausgeführt und mit einer umfänglichen Dichtung (84) versehen ist, um die Abdichtung zwischen dem Aufsatz und dem Scheinwerfergehäuse (12) sicherzustellen.

24. Vorderseite nach einem der Ansprüche 20 und 21, **dadurch gekennzeichnet, dass** das Zwischenelement (88) in Form eines verformbaren Elements hergestellt ist, insbesondere eines Balgs, der zwischen das Scheinwerfergehäuse (12) und die Scheibe (80) eingefügt ist.

25. Vorderseite nach einem der Ansprüche 20 bis 24, **dadurch gekennzeichnet, dass** das Zwischenelement (82; 88; 90; 100) eingerichtet ist, um einen Widerstand gegen die Bewegung zu bieten und es daher zu erlauben, einen Teil der Energie eines Aufpralls zu absorbieren.

26. Vorderseite nach einem der Ansprüche 20 bis 25, **dadurch gekennzeichnet, dass** das Zwischenelement (82; 88) verschiebbar oder rückgängig machbar verformbar ist.

27. Vorderseite nach einem der Ansprüche 20 und 21, **dadurch gekennzeichnet, dass** das Zwischenelement (90; 100) in Form eines Sicherungselements ausgebildet ist, das eingerichtet ist, um bei einem Aufprall gegen die Scheibe (80) zumindest zum Teil zu brechen.

28. Vorderseite nach Anspruch 27, **dadurch gekennzeichnet, dass** das Sicherungszwischenelement .(90) in das Scheinwerfergehäuse (12) eingebaut ist.

29. Vorderseite nach Anspruch 27, **dadurch gekennzeichnet, dass** das Sicherungszwischenelement (100) in die Scheibe (80) eingebaut ist.
